# NEUE EUROPÄISCHE PATENTSCHRIFT

(11) **EP 2 622 955 B2**
(45) Veröffentlichungstag und Bekanntmachung des Hinweises auf die Entscheidung über den Einspruch: **18.08.2021**
(45) Hinweis auf die Patenterteilung: 21.11.2018
(21) Anmeldenummer: 12196700.4
(22) Anmeldetag: 12.12.2012
(51) Int. Cl.: A01B 79/00, A01C 21/00, A01D 41/127

(54) **Landwirtschaftliche Maschine mit einem System zur selbsttätigen Einstellung eines Bearbeitungsparameters und zugehöriges Verfahren**
Agricultural machine with a system for automatically adjusting a processing parameter and associated method
Machine agricole dotée d'un système de réglage automatique d'un paramètre de travail et procédé correspondant

(30) Priorität: 31.01.2012 DE 102012201333
(43) Veröffentlichungstag der Anmeldung: 07.08.2013
(73) Patentinhaber: Deere & Company, Moline, IL 61265 (US)
(72) Erfinder: Peters, Ole, 25724 Neufeld (DE); Lenz, James E, Urbana, IL Illinois 61801 (US)
(74) Vertreter: Holst, Sönke

(56) Entgegenhaltungen:
- EP-A1- 0 922 385
- EP-A1- 0 970 595
- EP-A1- 1 692 929
- EP-A1- 2 658 370
- EP-A2- 1 405 556
- EP-A2- 2 524 586
- WO-A1-2012/091988
- WO-A2-95/02318
- WO-A2-2008/088916
- DE-A1- 10 129 133
- DE-A1- 19 508 944
- DE-A1- 19 614 916
- DE-A1- 19 921 996
- DE-A1-102005 008 105
- DE-A1-102006 055 858
- DE-A1-102007 049 652
- DE-T5-112006 003 007
- US-A- 5 931 882
- US-A- 6 070 539
- US-A1- 2007 089 390
- US-B2- 6 698 368

## Beschreibung

Die Erfindung betrifft eine landwirtschaftliche Maschine mit einem System zur selbsttätigen Einstellung eines Bearbeitungsparameters, umfassend:
eine elektronische Steuereinrichtung,
einen durch die Steuereinrichtung kontrollierten, fremdkraftbetätigten Aktor zur Verstellung mindestens eines Bearbeitungsparameters der landwirtschaftlichen Maschine, und einen mit der Steuereinrichtung verbundenen Sensor zur Erfassung der vertikalen Position der landwirtschaftlichen Maschine und/oder des Abstands zwischen der landwirtschaftlichen Maschine und einem Objekt in Form eines geographischen Merkmals, das einen Einfluss auf den Pflanzenbestand hat, sowie ein entsprechendes Verfahren.

### Stand der Technik

Bei landwirtschaftlichen Arbeiten hängt in vielen Fällen die unter ökonomischen und ökologischen Gesichtspunkten angemessenste Einstellung einer landwirtschaftlichen Bearbeitungsmaschine von Eigenschaften der jeweils bearbeiteten Stelle eines Feldes ab. Hierzu sei insbesondere auf die topografische Lage der jeweiligen Stelle verwiesen, die einen Einfluss auf die Versorgung der Pflanzen mit Wasser, Licht und Nährstoffen zur Folge hat. In Senken gelegene Bereiche eines Feldes sind beispielsweise üblicherweise reichlicher mit Wasser versorgt als Anhöhen. Aufgrund der reichlicheren Wasserversorgung wachsen in den Senken auch mehr (und größere) Pflanzen als auf den Anhöhen, die beim Säen somit dichter aneinander gesät werden können als auf den Anhöhen. Analog wird auf in den Senken auch mehr Dünger benötigt als auf den Anhöhen. Die unterschiedlichen Pflanzendichten lassen auch bei der Ernte unterschiedliche Einstellungen der Erntemaschine sinnvoll werden, denn beispielsweise bei einem Mähdrescher können bei größeren Materialdurchsätzen aufgrund größerer Pflanzendichten die Dreschspalte und Sieböffnungen größer als bei kleinen Materialdurchsätzen (und/oder die Erntegeschwindigkeit bei kleinen Pflanzenbestandsdichten größer als bei größeren Pflanzenbestandsdichten) gewählt werden. Neben der beschriebenen Topographie des Felds hat auch die Bodenart einen Einfluss auf die Einstellung der landwirtschaftlichen Bearbeitungsmaschine, denn auf leichten Sandböden wachsen z.B. weniger und kleinere Pflanzen als auf schweren Marschböden. Weitere Einflussgrößen sind die Nähe zu beschattenden Bäumen oder zu Wasserlöchern bzw. Quellen.

Im Stand der Technik wird dieses seit langem bekannte Problem der ortsspezifischen Einstellung von Bearbeitungsmaschinen einerseits durch Sollwertkarten gelöst, in denen Daten hinsichtlich der einzustellenden Parameter der Bearbeitungsmaschine georeferenziert abgespeichert sind. Diese Daten werden bei der Bearbeitung anhand der jeweiligen Position der Bearbeitungsmaschine abgerufen, die mittels eines satellitenbasierten Positionsbestimmungssystems, wie GPS, erfasst wird (vgl. DE 101 33 191 A1, US 5 931 882 A und US 6 070 539 A für die Bodenbearbeitung und das Ausbringen von Material und das Säen von Pflanzen oder DE 44 31 824 C1 für Erntemaschinen), oder die zu bestellende Fläche wird linear auf einem Speichermedium abgebildet und die zugehörigen Daten bei der Feldarbeit zur ortsspezifischen Ansteuerung der Bearbeitungsmaschine wegabhängig abgerufen (EP 0 282 639 A2). Die EP 0 992 186 A1 beschreibt ein Verfahren zu Bewirtschaftung mehrjähriger Pflanzen, wie Weinstöcke und Obstbäume, bei dem eine dreidimensionale Karte des Feldes mit den Standorten der einzelnen Pflanzen und ihrer Erträge erzeugt und zur Planung der nachfolgenden Maßnahmen herangezogen wird. Es wurde andererseits vorgeschlagen, an Bord einer Landmaschine lokale Sensoren zur Erfassung der Nährstoffversorgung und der sonstigen Bodeneigenschaften des zu bestellenden Bodens zu ermitteln und zur selbsttätigen Ermittlung der jeweiligen Ausbringmengen an Saatgut und Dünger heranzuziehen (DE 40 16 603 A1).

Bei der Bodenbearbeitung wurde auch vorgeschlagen (GB 2 318 652 A), die zum Ziehen eines Pfluges aufzubringenden Zugkräfte zu erfassen, um die Bodendichte zu messen und zur selbsttätigen Kontrolle der Arbeitsbreite des Pflugs, der Motordrehzahl und der Vorwärtsgeschwindigkeit des Traktors zu nutzen. Die DE 10 2007 049 652 A1 beschreibt einen Düngerstreuer, dessen Grobsteuerung durch ein Positionsbestimmungssystem und eine Karte erfolgt, in welcher Höhenlinien berücksichtigt sind. Außerdem kann die Hangneigung zur Feinsteuerung eines Aktors zur Ansteuerung von Wurfscheiben dienen, um die durch die Hangneigung beeinflusste Wurfweite zu berücksichtigen. Im Ergebnis soll ebenfalls eine vorgegebene Verteilung von Mineraldünger an der jeweiligen Position erreicht werden. Analog beschreibt die nachveröffentlichte EP 2 524 586 A2 eine Erkennung der seitlichen Neigung des überfahrenen Geländes anhand eines Höhenprofils, um das Spritzgestänge an die Seitenneigung des Geländes anzupassen, um gleichbleibende Abstände zu den Pflanzen einzuhalten. Auch wurde vorgeschlagen, die Drehzahl eines Reinigungsgebläses eines Mähdreschers davon abhängig einzustellen, ob er bergauf, bergab oder in einer horizontalen Ebene fährt (DE 197 05 841 A1).

Die bisherigen Ansätze zur Automatisierung der ortsspezifischen Kontrolle von landwirtschaftlichen Bearbeitungsmaschinen umfassen demnach entweder lokale Sensoren zur Erfassung von Bodeneigenschaften (DE 40 16 603 A1 oder GB 2 318 652 A), wozu relativ aufwändige und kostenträchtige Sensoren vorzusehen sind, um eine hinreichende Genauigkeit der Ausbringung der Materialien und die gewünschten pflanzenbaulichen Ergebnisse zu erzielen, oder Sollwertkarten und Positionsbestimmungssysteme (EP 0 282 639 A2, DE 101 33 191 A1, DE 44 31 824 C1, EP 0 992 186 A1, EP 2 524 586 A2, US 5 931 882 A und US 6 070 539 A), oder beruhen auf der Neigung des Geländes (DE 10 2007 049 652 A1, EP 2 524 586 A2, DE 197 05 841 A1). Die kartenbasierten Systeme leiden unter dem Aufwand für die Erstellung einer Sollwertkarte und hohen Kosten für ein hinreichend genau arbeitendes Positionsbestimmungssystem, was zur Folge hat, dass derzeit nur ein relativ geringer Anteil landwirtschaftlicher Maschinen mit einer derartigen kartenbasierten Steuerung ausgestattet ist.

### Aufgabe der Erfindung

Die Aufgabe der vorliegenden Erfindung wird darin gesehen, ein System und ein Verfahren zur selbsttätigen Einstellung von Bearbeitungsparametern einer landwirtschaftlichen Maschine bereitzustellen, dass die erwähnten Nachteile nicht oder in einem geringeren Maße aufweist.

### Lösung

Diese Aufgabe wird erfindungsgemäß durch die Lehre der Patentansprüche 1 und 11 gelöst, wobei in den weiteren Patentansprüchen Merkmale aufgeführt sind, die die Lösung in vorteilhafter Weise weiterentwickeln.

Eine landwirtschaftliche Maschine ist mit einem System zur selbsttätigen Einstellung eines Bearbeitungsparameters ausgestattet und weist dazu eine elektronische Steuereinrichtung, einen durch die Steuereinrichtung kontrollierten, fremdkraftbetätigten Aktor zur Verstellung mindestens eines Bearbeitungsparameters der landwirtschaftlichen Maschine und einen mit der Steuereinrichtung verbundenen Sensor zur Erfassung der vertikalen Position der landwirtschaftlichen Maschine auf. Im Betrieb leitet die Steuereinrichtung aus den Signalen des Sensors ab, in welcher topografischen Höhenzone aus einer Anzahl an topografischen Zonen eines Feldes sich die landwirtschaftliche Maschine jeweils befindet und steuert den Aktor in Abhängigkeit von der jeweiligen, aktuellen topografischen Höhenzone an, in welcher sich die landwirtschaftliche Maschine gerade befindet.

Die landwirtschaftliche Maschine umfasst somit einen Sensor, anhand von dessen Signalen die Steuereinrichtung bestimmt, in welcher topografischen Höhenzone eines Feldes sich die landwirtschaftliche Maschine gerade befindet. Die Steuereinheit kontrolliert den Aktor während der Fahrt - online - anhand der jeweiligen sensorisch erfassten topografischen Höhenzone. Dadurch erübrigen sich die Bereitstellung aufwändiger Sensoren zur Erfassung von Pflanzen- oder Bodeneigenschaften und die Erstellung von Sollwertkarten. Die erfindungsgemäße Maschine ermöglicht demnach auf wenig aufwändige und kostengünstige Weise eine an die jeweilige Stelle des Feldes angepasste Bearbeitung.

Der Sensor kann beispielsweise ein Luftdrucksensor sein, aus dessen Signalen sich die Höhe der landwirtschaftlichen Maschine über Normalnull oder einem beliebigen, anderen Bezugsniveau ableiten lässt. Die vertikale Position der Maschine kann alternativ oder zusätzlich mittels eines satellitenbasierten Positionsbestimmungssystems erfasst werden, das in der Regel keine besonders hohe Präzision aufzuweisen braucht und daher relativ preiswert verfügbar ist. Die topografische Zone des Felds kann alternativ oder zusätzlich mittels eines Sensors zur Erfassung der Neigung der landwirtschaftlichen Maschine in Vorwärtsrichtung unter zusätzlicher Berücksichtigung der Signale eines Weg-, Geschwindigkeits- oder Beschleunigungssensors zur Erfassung des von der landwirtschaftlichen Maschine zurückgelegten Weges, ihrer Geschwindigkeit oder Beschleunigung ermittelt werden, denn das Integral über den Sinus des Neigungswinkels entlang des von der landwirtschaftlichen Maschine zurückgelegten Wegs ergibt eine Höhenänderung der landwirtschaftlichen Maschine wieder. Auf diese Weise wird demnach sensorisch ermittelt, in welcher absoluten oder relativen Höhe des Feldes sich die landwirtschaftliche Maschine gerade befindet. Da erfahrungsgemäß der Boden und die darauf wachsenden Pflanzen in unterschiedlichen Höhen des Feldes auch unterschiedliche Eigenschaften aufweisen, wird das Feld in unterschiedliche topografische Höhenzonen unterteilt. Die Ansteuerung des Aktors zur Kontrolle mindestens eines Bearbeitungsparameters der landwirtschaftlichen Maschine erfolgt basierend auf der jeweils ermittelten topografischen Zone des Felds, bei denen es sich um Höhenzonen handelt.

Es ist denkbar, das Feld zusätzlich anhand der Neigung der landwirtschaftlichen Maschine (und somit des betreffenden Teils des Feldes) in topografische Zonen zu unterteilen und diese sensorisch zu erfassen, wozu Neigungssensoren zur Erfassung der Neigung der landwirtschaftlichen Maschine in Vorwärtsrichtung und/oder in der seitlichen Richtung Verwendung finden können. Dadurch können unterschiedliche topografische Neigungszonen des Feldes bestimmt werden. Da die Neigung auch einen Einfluss auf den Wasserhaushalt und die Sonnenbestrahlung und somit auf den Pflanzenbestand hat, kann der Bearbeitungsparameter der landwirtschaftlichen Maschine (zusätzlich zur Ansteuerung basierend auf der topografischen Höhenzone) auch auf der jeweiligen topografischen Neigungszone basieren.

Weiterhin kann zusätzlich zur vertikalen Höhe durch den Sensor der Abstand zu einem Objekt erfasst werden. Bei diesem Objekt handelt es sich um ein beliebiges geographisches Merkmal, das einen Einfluss auf den Pflanzenbestand hat, beispielsweise um einen Baum oder ein Wasserloch oder eine Quelle. Der Abstand zwischen dem Objekt und der landwirtschaftlichen Maschine kann beispielsweise mittels einer zweidimensional abbildenden Kamera, einer PMD- oder Stereokamera oder eines Laserscanners erfasst werden. Das Feld wird dann analog in Abstandszonen unterteilt und der Bearbeitungsparameter der landwirtschaftlichen Maschine beruht (zusätzlich zur Ansteuerung basierend auf der topografischen Neigungs- und/oder Höhenzone) auf der jeweiligen topografischen Abstandszone.

Die Steuereinrichtung erlernt während einer Lernphase zunächst die Zusammenhänge zwischen mittels einer Eingabeeinrichtung bewerkstelligten Bedienereingaben zur Kontrolle des Aktors und der jeweiligen topografischen Zone. In einer sich anschließenden Anwendungsphase kontrolliert die Steuereinrichtung dann den Aktor anhand der jeweiligen topografischen Zone und der zugehörigen gelernten Bedienereingabe, die in einem Speicher abgelegt wurde.

In der Anwendungsphase kann der Bediener durch entsprechende Eingaben in eine Eingabeeinrichtung die Betriebsparameter des Aktors abändern, woraufhin die Steuereinrichtung auch die gespeicherten, gelernten Bedienereingaben entsprechend aktualisiert und forthin verwendet. Bei späteren Arbeiten auf demselben Feld kann dann die Lernphase entfallen und direkt auf die im Speicher abgerufenen Betriebsparameter des Aktors in Abhängigkeit von der jeweiligen topografischen Zone zurückgegriffen werden.

Die Anzahl und/oder Größen der topografischen Zonen sind durch die Steuereinrichtung basierend auf den Bedienereingaben selbsttätig festlegbar. Hierzu wird anhand sich ändernder Bedienereingaben erkannt, wo eine Grenze zwischen den topografischen Zonen nach Ansicht des Bedieners liegen soll. Wenn der Bediener demnach einen Betriebsparameter des Aktors ändert, liegt in der Regel eine Grenze zwischen zwei topografischen Zonen vor, sodass die Steuereinrichtung an dieser Stelle selbsttätig das Ende der vorigen topografischen Zone und den Beginn eine neue topografische Zone verzeichnet und die Bedienereingaben den jeweiligen Zonen zuordnet.

Es wäre denkbar, die Steuereinrichtung zusätzlich mit einem Bodeneigenschaftensensor zur Erfassung von Bodeneigenschaften zu verbinden. Ein derartiger Bodeneigenschaftensensor kann beispielsweise die Zugkraft eines Bodenbearbeitungsgeräts erfassen. Die Steuereinrichtung kontrolliert den Aktor (zusätzlich zur Steuerung in Abhängigkeit von der jeweiligen topografischen Zone) basierend auf den Signalen des Bodeneigenschaftensensors. Auch kann ein Pflanzeneigenschaftensensor beliebige Eigenschaften, z. B. Bestandsdichte, Höhe, Farbe, Reflexionseigenschaften im Infraroten, des Pflanzenbestandes auf dem Feld erfassen, dessen Signale (zusätzlich zur Steuerung in Abhängigkeit von der jeweiligen topografischen Zone) durch die Steuereinrichtung zur Kontrolle des Aktors herangezogen werden.

Ein Anwendungsbeispiel für die vorliegende Erfindung ist ein Traktor mit einem daran angebrachten oder davon gezogenem Bearbeitungsgerät. Der Aktor kontrolliert die Vorwärtsgeschwindigkeit des Traktors und/oder (über eine Veränderung der Motordrehzahl und/oder der Übersetzung des Zapfwellengetriebes) die Drehzahl einer Zapfwelle, um die Arbeitsgeschwindigkeit von Bearbeitungselementen des Bearbeitungsgeräts zu verstellen, und/oder die vertikale Position einer verstellbaren Kupplung, an der das Bearbeitungsgerät befestigt ist, um die Arbeitstiefe von Bearbeitungselementen des Bearbeitungsgeräts zu verstellen.

Ein weiteres Anwendungsbeispiel wäre eine Bodenbearbeitungsmaschine, bei welcher der Aktor die Arbeitstiefe der Bodenbearbeitungswerkzeuge kontrolliert.

Auch an einer Verteilmaschine zur Ausgabe von Materialien wie Saatgut, Dung, Dünger, Herbiziden oder Pestiziden insbesondere in Form einer Sämaschine, Feldspritze oder eines Dung- oder Düngerstreuers kann die Erfindung genutzt werden, wobei der Aktor die Ausbringmenge je Flächeneinheit kontrolliert. Bei einer Sämaschine kann der Aktor die Sätiefe und/oder die Abstände des Saatguts in Vorwärtsrichtung und/oder in seitlicher Richtung vorgeben.

Schließlich kann die landwirtschaftliche Maschine ein Mähdrescher sein und der Aktor die Schnitthöhe und/oder die Haspelhöhe eines Erntevorsatzes und/oder die Drehzahl eines Reinigungsgebläses und/oder die Öffnungsgröße eines Reinigungssiebs und/oder die Vortriebsgeschwindigkeit des Mähdreschers kontrollieren.

### Ausführungsbeispiel

In den Zeichnungen sind zwei nachfolgend näher beschriebene Ausführungsbeispiele der Erfindung dargestellt. Es zeigt:
- Fig. 1: eine seitliche Ansicht einer landwirtschaftlichen Maschine in Form eines Traktors mit einer gezogenen Bestellkombination,
- Fig. 2: ein Diagramm einer Steuereinrichtung mit den angeschlossenen Komponenten zur Kontrolle der Aktoren der Bestellkombination,
- Fig. 3: ein Flussdiagramm, nach dem die Steuereinrichtung vorgeht,
- Fig. 4: eine seitliche Ansicht einer landwirtschaftlichen Maschine in Form eines Mähdreschers.

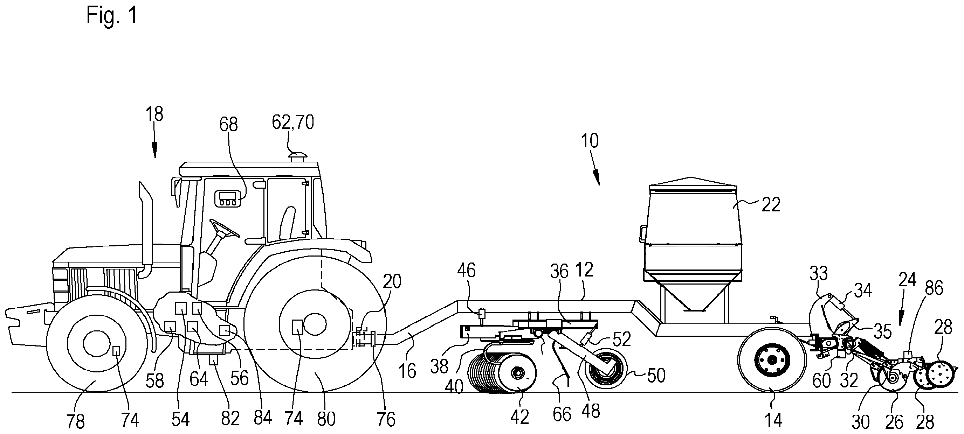

In der Figur 1 ist eine landwirtschaftliche Maschine in Form eines Traktors 18 mit einer durch den Traktor 18 gezogenen Bestellkombination 10 dargestellt. Die Bestellkombination umfasst einen sich in der Vorwärtsrichtung, die in der Zeichnung von rechts nach links verläuft, erstreckenden Rahmen 12 auf, der sich über ein Laufräder 14 umfassendes Fahrwerk auf dem Erdboden abstützt. An seinem vorderen Ende ist der Rahmen 12 über eine Deichsel 18 über eine lösbare Kupplung 20 mit dem Traktor 18 verkuppelt.

Der Rahmen 12 trägt vor den Laufrädern 14 einen Saatgutbehälter 22 zur Aufnahme von Saatgut. Durch, in der Zeichnung nicht dargestellte Messsysteme wird das Saatgut aus dem Saatgutbehälter 22 abgemessen und über Saatgutleitungen an der Rückseite des Rahmens 12 angeordneten Säeinrichtungen 24 zugeführt, die einen Furchenöffner 26 in Form einer Scheibe, Säschare 30, die das Saatgut in die durch den Furchenöffner 26 erzeugte Furche abgeben und Schließräder 28 zum anschließenden Schließen der Furche umfassen. Es sind mehrere Säeinrichtungen 24 seitlich nebeneinander an einem sich am Rahmen 12 abstützenden, sich quer zur Vorwärtsrichtung erstreckenden Werkzeugträger 32 abgestützt. Die Säeinrichtungen 24 sind um eine parallel zur Längsachse des Werkzeugträgers 32 verlaufende Achse schwenkbar gelagert. Der Schwenkwinkel aller Säeinrichtungen 24 und damit die Sätiefe wird durch einen Aktor 34 in Form eines Hydraulikzylinders festgelegt, der sich zwischen einer mit dem Rahmen 12 verbundenen Halterung 33 und einem mit den Säeinrichtungen 24 gekoppelten Arm 35 erstreckt.

Vor dem Saatgutbehälter 22 ist unterhalb des Rahmens 12 ein Trägerrahmen 36 befestigt. Der Trägerrahmen 36 haltert einen um eine horizontale, quer zur Vorwärtsrichtung verlaufende Schwenkachse 44 schwenkbaren Schwenkrahmen 38, an dem sich über eine U-förmige Feder 40 ein Bodenbearbeitungswerkzeug 42 in Form einer Scheibenegge abstützt. Ein zwischen Rahmen 12 und Schwenkrahmen 38 angeordneter Aktor 46 in Form eines Hydraulikzylinders definiert den Schwenkwinkel des Schwenkrahmens 38 um die Schwenkachse 44. Der Aktor 46 ist mit einem einstellbaren Druck betreibbar und steuert auf diese Weise den Druck, mit dem das Bodenbearbeitungswerkzeug 42 auf den Erdboden einwirkt. Anstelle der Scheibenegge kann ein beliebiges anderes Bodenbearbeitungswerkzeug 42 verwendet werden.

Am Trägerrahmen 36 ist weiterhin in Vorwärtsrichtung hinter dem Bodenbearbeitungswerkzeug 42 eine, um eine parallel zur Schwenkachse 44 verlaufende Achse schwenkbare Halterung 48 angelenkt, an deren unterem Ende eine Bodenwalze 50 in Form eines Reifenpackers angebracht ist. Ein Aktor 52 in Form eines Hydraulikzylinders, der sich zwischen dem Trägerrahmen 36 und der Halterung 48 erstreckt, definiert den Schwenkwinkel der Halterung 48. Der Aktor 52 ist mit einem einstellbaren Druck beaufschlagbar und steuert auf diese Weise den Druck, mit dem die Bodenwalze 42 auf den Erdboden einwirkt. Anstelle eines Reifenpackers könnte jede beliebige Art von Walzen Verwendung finden, beispielsweise Schrägstab-Packerwalzen, Rohrstab-Packerwalzen, Scheiben-Packerwalzen, Zahn-Packerwalzen, Spiral-Packerwalzen und Prismenwalzen. Die Bodenwalze 50 könnte auch als Frontreifenpacker oder Stützwalze ausgeführt sein, d. h. ein Teilgewicht der Bestellkombination tragen und zur Tiefenführung dienen, wobei die Laufräder 14 bei der Arbeit auszuheben wären. Außer der dargestellten starren Befestigung der Bodenwalze 50 an der Halterung 48 wäre auch die Zwischenschaltung einer Feder denkbar. Auch könnte jedes einzelne Rad der Bodenwalze 50 über einen ihm zugeordneten Aktor 52 steuerbar sein.

An beiden seitlichen Enden des Bodenbearbeitungswerkzeugs 42 sind mit dem Schwenkrahmen 38 verbundene U-förmige Federn 40 angeordnet. Auch sind Halterungen 48 an beiden seitlichen Enden der Bodenwalze 50 angeordnet und mit dem Trägerrahmen 36 verbunden. Das Bodenbearbeitungswerkzeug 42 und die Bodenwalze 50 können sich aus drei oder mehr seitlich nebeneinander angeordneten Abschnitten zusammensetzen, von denen die Äußeren, in an sich bekannter Weise, zum Straßentransport hochklappbar sind. Dazu sind entsprechende Antriebe in Form von Hydraulikzylindern vorzusehen. Zwischen dem Bodenbearbeitungswerkzeug 42 und der Bodenwalze 50 ist ein Striegel 66 angeordnet, der mit dem Trägerrahmen 36 verbunden ist.

Die Bestellkombination 10 stellt nach alledem eine Kombination aus einer Sämaschine mit dem Saatgutbehälter 22 und den Säeinrichtungen 24 einerseits und einem Bodenbearbeitungsgerät mit dem Bodenbearbeitungswerkzeug 42, dem Striegel 66 und der Bodenwalze 50 andererseits dar.

Der Traktor 18 ist mit einer Steuereinrichtung 54 ausgestattet, die eingerichtet ist, über in der Zeichnung nicht dargestellte Leitungen die Aktoren 34, 46 und 52 mittels einer vorzugsweise Proportionalventile enthaltenden Ventileinrichtung 56 aus einer Quelle 58 unter Druck stehenden Hydraulikfluids mit Hydraulikfluid zu beaufschlagen bzw. zu entlasten. In der dargestellten Ausführungsform sind die Aktoren 34, 46 und 52 doppeltwirkend, um die Arbeitselemente der Bestellkombination 10 im Vorgewende oder bei einer Straßenfahrt ausheben zu können. Denkbar wäre aber auch die Verwendung einfachwirkender Hydraulikzylinder. Die Steuereinrichtung 54 ist somit eingerichtet, den Druck der Aktoren 46 und 52 vorzugeben. Eine Information über die Position des Aktors 34 wird der Steuereinrichtung 54 über einen Fühler 60 zugeführt, so dass die Sätiefe der Säeinrichtungen 24 durch die Steuereinrichtung 54 mittels der Ventileinrichtung 56 regelbar ist.

Die Ventileinrichtung 56 kann sich an Bord des Traktors 18 befinden, wie in der Figur 1 gezeigt, oder an Bord der Bestellkombination 18. Im zweiten Fall wäre sie mit der Steuereinrichtung 54 über ein Bussystem, z.B. einen ISO-Bus, verbunden, das auch die Verbindung zwischen der Steuereinrichtung 54 und dem Aktor 86 und dem Fühler 60 herstellt. Außerdem könnte auch die Steuereinrichtung 54 an Bord der Bestellkombination 10 angeordnet sein und nur die Bedienereingabeeinrichtung 68 als virtuelles Terminal an Bord des Traktors 18 positioniert und über ein Bussystem mit der Steuereinrichtung 54 (und ggf. mit einer weiteren Steuereinrichtung des Traktors 18, die den Aktor 84 und die Ventileinrichtung 56 kontrolliert) verbunden werden.

Der Steuereinrichtung 54 werden von einem Positionsbestimmungssystem 62 mit einer Satellitenempfangsantenne, die zum Empfang von Signalen des GPS (Global Positioning Systems) eingerichtet ist, eine Information über die jeweilige Position (einschließlich der Höhe über Normalnull) des Zugfahrzeugs 54 enthaltende Signale zugeführt. Weiterhin ist an Bord des Traktors 18 ein Neigungssensor 70 vorhanden, der die seitliche Neigung (Rollwinkel) und die Neigung in Vorwärtsrichtung (Nickwinkel) des Traktors 18 erfasst und vorzugsweise, aber nicht notwendigerweise, mit in das Gehäuse des Positionsbestimmungssystems 62 eingebaut sein kann. Die Neigungswinkel können beispielsweise mittels Beschleunigungssensoren oder durch Pendel, deren Winkel erfasst wird, sensiert werden und werden der Steuereinrichtung 54 zugeführt. Ein Geschwindigkeitssensor 74 erfasst die Drehzahl eines vorderen Rades 78 oder rückwärtigen Rades 80 des Traktors 18 und führt seine Signale ebenfalls der Steuereinrichtung 54 zu. Die Geschwindigkeit des Traktors 18 über dem Erdboden kann auch mittels eines Radarsensors 82 erfasst werden.

Ein Aktor 84 in Form einer Geschwindigkeitsvorgabeeinrichtung ist mit der Steuereinrichtung 54 verbunden und dient zur Vorgabe der Vorwärtsgeschwindigkeit des Traktors 18, indem er die Drehzahl des Antriebsmotors des Traktors 18 und/oder der Getriebeübersetzung zwischen dem Antriebsmotor und den antreibbaren Rädern 78 und/oder 80 verstellt. Ein Aktor 86 gibt den Abstand vor, in welchem die Säeinrichtungen 24 Saatgut im Erdboden ablegen. Der Aktor 86 kann beispielsweise zum Antrieb der Messsysteme der Säeinrichtungen 24 oder zur Veränderung von deren Drehzahl dienen.

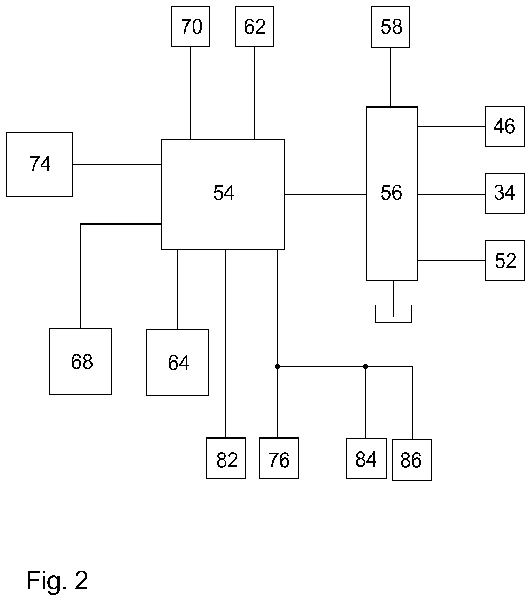

Schließlich ist am Arbeitsplatz des Traktors 18 noch eine Bedienereingabeeinrichtung 68 angebracht, die ebenfalls mit der Steuereinrichtung 54 verbunden ist. Die Steuereinrichtung 54 und die mit ihr verbundenen Komponenten einschließlich einer Speichereinrichtung 64 sind in der Figur 2 schematisch dargestellt.

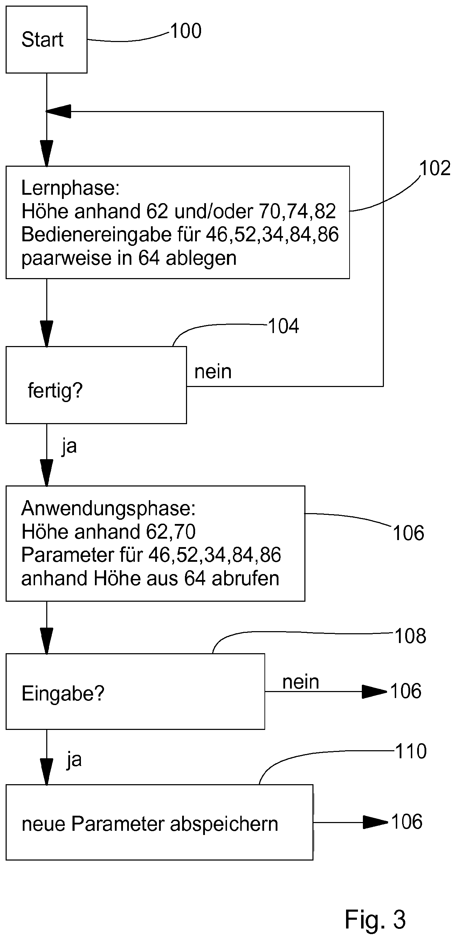

Im Betrieb arbeitet die Steuereinrichtung 54 nach dem Flussdiagramm der Figur 3. Nach dem Start im Schritt 100 wird zunächst eine Lernphase durchgeführt (Schritt 102), in der die Steuereinrichtung 54 die aktuelle Höhe des Traktors 18 über Normalnull anhand der Positionssignale des Positionsbestimmungssystems 62 und/oder eine relative Höhenänderung gegenüber einer Ausgangsposition bei Beginn der Arbeit bzw. bei Erreichen einer vorgegebenen Referenzposition anhand der Signale des Neigungssensors 70 hinsichtlich der Neigung in Vorwärtsrichtung und der Signale einer oder mehrerer der Geschwindigkeitssensoren 74 und/oder des Radarsensors 82 bestimmt wird. Bei der Feldarbeit gibt der Bediener an seinem Arbeitsplatz über die Bedienereingabeeinrichtung 68 (oder andere geeignete Eingabemittel) Vorgaben für den Druck im Aktor 46, der den Bodendruck bzw. die Arbeitstiefe des Bodenbearbeitungswerkzeugs 42 bestimmt, für den Druck des Aktors 52, der den Bodendruck der Bodenwalze 50 bestimmt, für den Druck bzw. die Position des Aktors 34, der die Sätiefe der Säeinrichtungen 24 bestimmt, für die Vortriebsgeschwindigkeit des Traktors 18, die über den Aktor 84 kontrolliert wird und über die Dichte des ausgebrachten Saatguts, die über den Aktor 86 kontrolliert wird. Die Höhe bzw. Höhenänderung und die zugehörigen Parameter der Aktoren 46, 52, 34, 84, 86 werden paarweise in der Speichereinrichtung 64 abgelegt. Dabei können die vom Bediener eingegebenen Sollwerte der Parameter oder die mittels geeigneter Sensoren (z. B. 74 und/oder 82 für die Vorwärtsgeschwindigkeit) erfassten Istwerte der Parameter verwendet werden. Durch geeignete Programmierung der Steuereinheit 54 kann der Versatz zwischen den Sensoren 62, 70 und den im Bodeneingriff befindlichen Komponenten der Bestellkombination 18 (d.h. Bodenbearbeitungswerkzeug 42, Bodenwalze 50 und Säeinrichtungen 24) berücksichtigt werden, um die Genauigkeit zu verbessern.

Sobald der Bediener mit dem Traktor 18 und der Bestellkombination 10 einen hinreichend repräsentativen Teil des Felds abgefahren hat, der möglichst alle Höhenbereiche des Felds abdeckt, kann der Bediener im Schritt 104 eingeben, dass die Lernphase beendet ist. Ist das nicht der Fall, folgt wieder der Schritt 102, sonst der Schritt 106.

In der Speichereinrichtung 64 liegen zum Zeitpunkt des Erreichens des Schritts 106 Informationen für alle Höhenbereiche des Felds und die zugehörigen Parameter der Aktoren 46, 52, 34, 84, 86 vor. Dabei können die Höhenbereiche in zumindest zwei ("tief" und "hoch"), drei ("tief", "mittel" und "hoch") oder noch mehr topografische Zonen aufgeteilt werden. Die Steuereinrichtung 54 geht dann, wenn eine Änderung der Bedienereingabe und gleichzeitig eine nicht-vernachlässigbare Änderung der Werte des Sensors 62 und/oder 70 vorliegt, davon aus, dass eine Grenze zwischen zwei topografischen Zonen überfahren wurde, sodass ggf. eine neue topografische Zone angelegt werden muss, wenn diese bisher noch nicht durchfahren wurde. Die Bedienereingaben werden dann der jeweiligen topografische Zone zugeordnet. Auf diese Weise erfolgt die Einteilung des Feldes in topografische Zonen während der Fahrt anhand der Werte des Sensors 62 und/oder 70 und der Bedienereingaben.

Die in den jeweiligen topografischen Höhenzonen ermittelten Parameter der Aktoren 46, 52, 34, 84, 86 können zweckmäßigerweise gemittelt werden, um die Datenmengen nicht zu groß werden zu lassen und einzelne Fehleingaben ausgleichen zu können. Es werden für die fünf Aktoren 46, 52, 34, 84, 86 diesen jeweils zugeordnete, in der Regel unterschiedliche Parameter abgespeichert.

Im Schritt 106 wird dann der einzustellende Parameter anhand der jeweils erfassten Höhe aus der Speichereinrichtung 64 abgerufen und zur selbsttätigen Einstellung der Aktoren 46, 52, 34, 84 und 86 herangezogen. Im Schritt 108 wird dann abgefragt, ob der Bediener über die Bedienereingabeeinrichtung 68 einen oder mehreren der aktuellen Parameter der Aktoren 46, 52, 34, 84 oder 86 übersteuert hat. Ist das nicht der Fall, folgt wieder der Schritt 106, sonst der Schritt 110, in dem die neuen, nun durch den Bediener eingegebenen Parameter in der Speichereinrichtung 64 abgelegt und zur Ansteuerung der Aktoren 46, 52, 34, 84, 86 herangezogen werden.

Durch die höhenabhängige Ansteuerung der Aktoren 46, 52, 34, 84, 86 wird die Kontrolle der Bestellkombination 18 auf einfache Weise automatisiert und die grundlegendsten agronomischen Einflussgrößen, die bei der Einstellung der Bestellkombination zu berücksichtigen sind (nämlich ob gerade eine Senke, eine Anhöhe oder ein dazwischen liegender Bereich bearbeitet wird), in Betracht gezogen. So kann beispielsweise der Abstand des Saatguts mittels des Aktors 86 auf trockenen Anhöhen größer als in feuchten Senken gewählt werden. Durch einen anderen Aktor (nicht gezeigt) könnten auch einzelne Säeinheiten 24 ab- und eingeschaltet werden, um den Reihenabstand quer zur Vorwärtsrichtung zu variieren. Die Vorwärtsgeschwindigkeit kann auf den Anhöhen größer als in den Senken gewählt werden, in denen wiederum eine intensivere Bodenbearbeitung als auf den Anhöhen stattfinden kann.

Als weitere Verfeinerung kann auch noch die mit dem Neigungssensor 70 erfasste Neigung des Traktors 18 in seitlicher Richtung berücksichtigt werden und in den Schritten 102 und 106 eine Unterscheidung erfolgen, ob der gerade bearbeitete Teil des Felds horizontal oder geneigt ist. Auch kann die Zugkraft in der Deichsel 16 mittels eines Zugkraftsensors 76 erfasst werden und dadurch auf die Bodeneigenschaften zurückgeschlossen werden, die in den Schritten 102 und 106 ebenfalls Berücksichtigung finden würden.

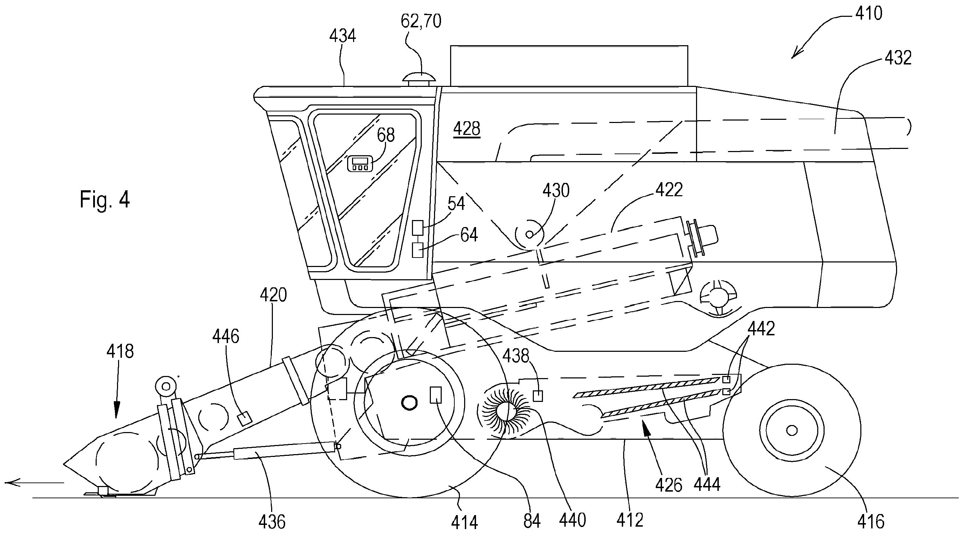

Die Figur 4 zeigt eine selbstfahrende Erntemaschine in Form eines Mähdreschers 410 mit einem Fahrgestell 412, das sich über angetriebene vordere Räder 414 und lenkbare rückwärtige Räder 416 auf dem Boden abstützt und von diesen fortbewegt wird. Die Räder 414, 416 werden mittels nicht gezeigter Antriebsmittel in Drehung versetzt, um den Mähdrescher 410 z. B. über ein abzuerntendes Feld zu bewegen. Im Folgenden beziehen sich Richtungsangaben, wie vorn und hinten, auf die Fahrtrichtung V des Mähdreschers 410 im Erntebetrieb, die in der Figur 4 nach links verläuft.

An den vorderen Endbereich des Mähdreschers 410 ist ein Erntevorsatz 418 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägfördererzusammenbau 420 einem Axialdreschwerk 422 zuzuführen. Das im Axialdreschwerk 422 durch Dreschkörbe und Roste hindurchtretende, Körner und Verunreinigungen enthaltende Gemisch gelangt in eine Reinigungseinrichtung 426. Durch die Reinigungseinrichtung 426 gereinigtes Getreide wird mittels einer Körnerschnecke einem Elevator zugeführt, der es in einen Korntank 428 befördert. Das gereinigte Getreide aus dem Korntank 50 kann durch ein Entladesystem mit einer Querschnecke 430 und einem Entladeförderer 432 entladen werden. Die genannten Systeme werden mittels eines Verbrennungsmotors angetrieben und von einem Bediener aus einer Fahrerkabine 434 heraus kontrolliert und gesteuert.

Eine Steuerung 54 kontrolliert (über nicht gezeigte Ventile) die Position eines Aktors 436 zur Veränderung der Höhe des Erntevorsatzes 418 über dem Boden, eines Aktors 438 zur Verstellung der Drehzahl eines Gebläses 440 der Reinigung 426, von zwei Aktoren 442 zur Verstellung der Öffnungsweite von Sieben 444 der Reinigung 426 und eines Aktors 84 zur Vorgabe der Vortriebsgeschwindigkeit des Mähdreschers 410. Ein weiterer von der Steuerung 54 kontrollierter Aktor (nicht gezeigt) könnte die Höhe einer Haspel des Erntevorsatzes 418 vorgeben.

Die Arbeitsweise der Steuerung 54 des Mähdreschers 410 der Figur 4 entspricht dem Flussdiagramm der Figur 3. Im Schritt 102 gibt der Bediener über die Bedienereingabeeinrichtung 68 die Parameter für die Aktoren 84, 436, 438 und 442 vor, die gemeinsam mit der Höhe (über das Positionsbestimmungssystem 62 ermittelt) und/oder die Höhenänderung (über den Neigungssensor 62 ermittelt) in der Speichereinrichtung 64 abgelegt und im Schritt 106 wieder höhen- bzw. höhenänderungsabhängig abgerufen werden. Ein im Schrägförderer 420 positionierter Pflanzensensor 446 zur Erfassung der Menge der aufgenommenen Pflanzen kann zusätzlich mit der Steuerung 54 verbunden werden und seine Signale werden (analog zu dem Zugkraftsensor 76 in der Ausführungsform nach den Figuren 1 bis 3) in den Schritten 102 und 106 mit berücksichtigt.

Im Schritt 106 gemäß Figur 3 werden dann die Parameter der Aktoren 84, 436, 438 und 442 abhängig von der Höhe bzw. Höhenänderung des Mähdreschers 410 aus der Speichereinrichtung 64 abgerufen. Dadurch wird der Erntevorgang selbsttätig an die topografische Zone angepasst, in welcher sich der Mähdrescher 410 gerade befindet. Auf dünn bewachsenen Anhöhen ist der Durchsatz somit geringer als in dichter bewachsenen Senken, sodass die Vortriebsgeschwindigkeit in den Senken kleiner als in den Höhen sein wird. Analog wird die Schnitthöhe in den Senken größer als auf Anhöhen sein und der Aktor 436 das Schneidwerk weiter nach oben verbringen als auf Anhöhen, auf denen nur kleinere Pflanzen wachsen. Die unterschiedlichen, von der topografischen Höhenzone abhängigen Durchsätze finden auch Berücksichtigung in der Drehzahl des Gebläses 440 (Aktor 438) und bei der Einstellung der Öffnungsgrößen der Siebe 444 (Aktor 442).

## Patentansprüche

1. Landwirtschaftliche Maschine (10, 410) mit einem System zur selbsttätigen Einstellung eines Bearbeitungsparameters, umfassend: eine elektronische Steuereinrichtung (54), einen durch die Steuereinrichtung (54) kontrollierten, fremdkraftbetätigten Aktor (34, 46, 52, 84, 86, 436, 438, 442) zur Verstellung mindestens eines Bearbeitungsparameters der landwirtschaftlichen Maschine (10, 410), und einen mit der Steuereinrichtung (54) verbundenen Sensor (62, 70) zur Erfassung der vertikalen Position der landwirtschaftlichen Maschine (10, 410), **dadurch gekennzeichnet, dass** die Steuereinrichtung (54) konfiguriert ist, in einer Lernphase das Feld in unterschiedliche topografische Höhenzonen, in welchen die darin wachsenden Pflanzen unterschiedliche Eigenschaften aufweisen, zu unterteilen, und in einer Anwendungsphase aus den Signalen des Sensors (62, 70) abzuleiten, in welcher Höhenzone aus einer Anzahl an Zonen eines Feldes sich die landwirtschaftliche Maschine (10, 410) jeweils befindet und den Aktor (34, 46, 52, 84, 86, 436, 438, 442) online in Abhängigkeit von der jeweiligen Höhenzone anzusteuern, wobei die Steuereinrichtung (54) betreibbar ist, während der Lernphase zunächst die Zusammenhänge zwischen Bedienereingaben zur Kontrolle des Aktors (34, 46, 52, 84, 86, 436, 438, 442) und der jeweiligen topografischen Zone zu erlernen und abzuspeichern und anschließend in der Anwendungsphase den Aktor (34, 46, 52, 84, 86, 436, 438, 442) anhand der jeweiligen topografischen Höhenzone und der zugehörigen, abgespeicherten Bedienereingabe zu kontrollieren und wobei in der Lernphase die Anzahl und/oder Größen der topografischen Höhenzonen in der Steuereinrichtung (54) durch die Steuereinrichtung (54) basierend auf den Bedienereingaben selbsttätig festlegbar sind, indem die Steuereinrichtung (54) konfiguriert ist, anhand sich ändernder Bedienereingaben zu erkennen, wo eine Grenze zwischen den topografischen Zonen liegen soll, indem die Steuereinrichtung (54) dort, wo der Bediener einen Betriebsparameter des Aktors (34, 46, 52, 84, 86, 436, 438, 442) ändert, selbsttätig das Ende der vorigen topografischen Zone und den Beginn einer neuen topografische Zone verzeichnet und die Bedienereingaben den jeweiligen Zonen zuordnet.

2. Landwirtschaftliche Maschine (10, 410) nach Anspruch 1, wobei die Steuereinrichtung (54) betreibbar ist, über eine Eingabeeinrichtung (68) in der Anwendungsphase Eingaben eines Bedieners zur Änderung von Betriebsparameters des Aktors (34, 46, 52, 84, 86, 436, 438, 442) zu empfangen und die gespeicherten, gelernten Bedienereingaben entsprechend dieser Eingaben zu aktualisieren und forthin zur Kontrolle des Aktors (34, 46, 52, 84, 86, 436, 438, 442) zu verwenden.

3. Landwirtschaftliche Maschine (10, 410) einem der Ansprüche 1 bis 2, wobei die Steuereinrichtung (54) mit einem Bodeneigenschaftensensor (76) zur Erfassung von Bodeneigenschaften und/oder einem Pflanzeneigenschaftensensor (446) zur Erfassung von Pflanzeneigenschaften verbunden und betreibbar ist, den Aktor (34, 46, 52, 84, 86, 436, 438, 442) zusätzlich basierend auf den Signalen des Bodeneigenschaftensensors (76) und/oder des Pflanzeneigenschaftensensors (446) zu kontrollieren.

4. Landwirtschaftliche Maschine (10, 410) nach einem der vorhergehenden Ansprüche, wobei der Sensor (62) zur Erfassung der vertikalen Position der Maschine (10, 410) einen Luftdrucksensor und/oder ein satellitenbasiertes Positionsbestimmungssystem (62) umfasst.

5. Landwirtschaftliche Maschine (10) nach einem der Ansprüche 1 bis 4, wobei die landwirtschaftliche Maschine ein Traktor (18) mit einem daran angebrachten oder davon gezogenem Bearbeitungsgerät (42, 50) ist und der Aktor (84) die Geschwindigkeit des Traktors (18) und/oder die Drehzahl einer Zapfwelle und/oder die Position einer verstellbaren Kupplung, an der das Bearbeitungsgerät (42, 50) befestigt ist, kontrolliert.

6. Landwirtschaftliche Maschine (10) nach einem der Ansprüche 1 bis 5, wobei die landwirtschaftliche Maschine (10) eine Bodenbearbeitungsmaschine ist oder umfasst und der Aktor (46, 52) die Arbeitstiefe der Bodenbearbeitungswerkzeuge (42, 50) der Bodenbearbeitungsmaschine kontrolliert.

7. Landwirtschaftliche Maschine (10) nach einem der Ansprüche 1 bis 6, wobei die landwirtschaftliche Maschine (10) eine Sämaschine mit Säeinrichtungen (24) ist oder umfasst und der Aktor (34, 86) die Sätiefe und/oder die Abstände des Saatguts in Vorwärtsrichtung und/oder in seitlicher Richtung kontrolliert.

8. Landwirtschaftliche Maschine (10) nach einem der Ansprüche 1 bis 5, wobei die landwirtschaftliche Maschine (10) eine Verteilmaschine zur Ausgabe von Materialien wie Saatgut, Dünger, Herbiziden oder Pestiziden ist oder umfasst und der Aktor (86) die Ausbringmenge je Flächeneinheit kontrolliert.

9. Landwirtschaftliche Maschine (410) nach einem der Ansprüche 1 bis 4, wobei die landwirtschaftliche Maschine ein Mähdrescher (410) ist und der Aktor (84, 436, 438, 442) die Schnitthöhe und/oder die Haspelhöhe eines Erntevorsatzes (418) und/oder die Drehzahl eines Reinigungsgebläses (440) und/oder die Öffnungsgröße eines Reinigungssiebs (444) und/oder die Vortriebsgeschwindigkeit des Mähdreschers (410) kontrolliert.

10. Landwirtschaftliche Maschine (10, 410) nach einem der Ansprüche 1 bis 9, wobei der Sensor (62, 70) zusätzlich zur Erfassung der Neigung der landwirtschaftlichen Maschine (10, 410) in Vorwärtsrichtung und/oder in der seitlichen Richtung eingerichtet ist und die Steuereinrichtung (54) betreibbar ist, unterschiedliche topografische Neigungszonen des Feldes zu bestimmen und den Bearbeitungsparameter der landwirtschaftlichen Maschine zusätzlich zur auf der topografischen Höhenzone basierenden Ansteuerung auch basierend auf der jeweiligen topografischen Neigungszone anzusteuern.

11. Verfahren zur selbsttätigen Einstellung eines Bearbeitungsparameters einer landwirtschaftlichen Maschine (10, 410), wobei: eine elektronische Steuereinrichtung (54) einen fremdkraftbetätigten Aktor (34, 46, 52, 84, 86, 436, 438, 442) zur Verstellung mindestens eines Bearbeitungsparameters der landwirtschaftlichen Maschine (10, 410) kontrolliert und ein mit der Steuereinrichtung (54) verbundener Sensor (62, 70) die vertikale Position der landwirtschaftlichen Maschine (10, 410) erfasst, **dadurch gekennzeichnet, dass** die Steuereinrichtung (54) in einer Lernphase das Feld in unterschiedliche topografische Höhenzonen, in welchen die darin wachsenden unterschiedliche Eigenschaften aufweisen, unterteilt und in einer Anwendungsphase aus den Signalen des Sensors (62, 70) ableitet, in welcher Höhenzone aus einer Anzahl an Zonen eines Feldes sich die landwirtschaftliche Maschine (10, 410) jeweils befindet und den Aktor (34, 46, 52, 84, 86, 436, 438, 442) online in Abhängigkeit von der jeweiligen Höhenzone ansteuert, wobei die Steuereinrichtung (54) während der Lernphase zunächst die Zusammenhänge zwischen Bedienereingaben zur Kontrolle des Aktors (34, 46, 52, 84, 86, 436, 438, 442) und der jeweiligen topografischen Zone erlernt und abspeichert und anschließend in der Anwendungsphase den Aktor (34, 46, 52, 84, 86, 436, 438, 442) anhand der jeweiligen topografischen Höhenzone und der zugehörigen, abgespeicherten Bedienereingabe kontrolliert, und wobei in der Lernphase die Anzahl und/oder Größen der topografischen Höhenzonen in der Steuereinrichtung (54) durch die Steuereinrichtung (54) basierend auf den Bedienereingaben selbsttätig festgelegt wird, indem die Steuereinrichtung (54) anhand sich ändernder Bedienereingaben erkennt, wo eine Grenze zwischen den topografischen Zonen liegen soll, indem die Steuereinrichtung (54) dort, wo der Bediener einen Betriebsparameter des Aktors (34, 46, 52, 84, 86, 436, 438, 442) ändert, selbsttätig das Ende der vorigen topografischen Zone und den Beginn einer neuen topografische Zone verzeichnet und die Bedienereingaben den jeweiligen Zonen zuordnet.

## Claims

1. Agricultural machine (10, 410) having a system for automatic setting of a working parameter, comprising: an electronic control device (54), an actuator (34, 46, 52, 84, 86, 436, 438, 442), which is controlled by the control device (54) and actuated under external power, for adjustment of at least one working parameter of the agricultural machine (10, 410), and a sensor (62, 70), which is connected to the control device (54), for detection of the vertical position of the agricultural machine (10, 410), **characterized in that** the control device (54) is configured to, in a learning phase, divide the field into different topographic height zones in which the crops growing therein have different characteristics, and to, in a usage phase, derive from the signals of the sensor (62, 70) which height zone of a number of zones of a field the agricultural machine (10, 410) is situated in in each case, and to activate the actuator (34, 46, 52, 84, 86, 436, 438, 442) online as a function of the respective height zone, wherein the control device (54) can be operated such that, during the learning phase, it firstly learns and stores the relationships between operator inputs regarding the control of the actuator (34, 46, 52, 84, 86, 436, 438, 442) and the respective topographical zone, and subsequently, in the usage phase, it controls the actuator (34, 46, 52, 84, 86, 436, 438, 442) on the basis of the respective topographical height zone and the associated stored operator input, and wherein, in the learning phase, the number and/or sizes of the topographical height zones can be set automatically in the control device (54) by the control device (54) on the basis of the operator inputs, by virtue of the control device (54) being configured to identify, on the basis of changing user inputs, where a boundary between the topographical zones is intended to lie, by virtue of the control device (54) automatically recording the end of a previous topographical zone and the start of a new topographical zone where the operator changes an operating parameter of the actuator (34, 46, 52, 84, 86, 436, 438, 442) and assigning the operator inputs to the respective zones.

2. Agricultural machine (10, 410) according to Claim 1, wherein the control device (54) can be operated such that, in the usage phase, it receives via an input device (68) operator inputs regarding the change of operating parameters of the actuator (34, 46, 52, 84, 86, 436, 438, 442), and it updates the stored, learned operator inputs in accordance with said inputs and henceforth uses said updated inputs for the control of the actuator (34, 46, 52, 84, 86, 436, 438, 442).

3. Agricultural machine (10, 410) according to one of Claims 1 to 2, wherein the control device (54) is connected to a soil properties sensor (76) for detection of soil properties and/or to a crop properties sensor (446) for detection of crop properties, and can be operated so as to control the actuator (34, 46, 52, 84, 86, 436, 438, 442) additionally on the basis of the signals of the soil properties sensor (76) and/or of the crop properties sensor (446).

4. Agricultural machine (10, 410) according to one of the preceding claims, wherein the sensor (62) for detection of the vertical position of the machine (10, 410) comprises an air pressure sensor and/or a satellite-based position determining system (62).

5. Agricultural machine (10) according to one of Claims 1 to 4, wherein the agricultural machine is a tractor (18) with a working implement (42, 50) mounted thereon or towed thereby, and the actuator (84) controls the speed of the tractor (18) and/or the rotational speed of a power takeoff shaft and/or the position of an adjustable coupling to which the working implement (42, 50) is fastened.

6. Agricultural machine (10) according to one of Claims 1 to 5, wherein the agricultural machine (10) is or comprises a soil working machine, and the actuator (46, 52) controls the working depth of the soil working tools (42, 50) of the soil working machine.

7. Agricultural machine (10) according to one of Claims 1 to 6, wherein the agricultural machine (10) is or comprises a sowing machine with sowing devices (24), and the actuator (34, 86) controls the sowing depth and/or the distances between the seeds in the forward direction and/or in the sideward direction.

8. Agricultural machine (10) according to one of Claims 1 to 5, wherein the agricultural machine (10) is or comprises a spreading machine for discharging materials such as seeds, fertilizer, herbicides or pesticides, and the actuator (86) controls the discharge quantity per unit area.

9. Agricultural machine (410) according to one of Claims 1 to 4, wherein the agricultural machine is a combine harvester (410) and the actuator (84, 436, 438, 442) controls the cut height and/or the reel height of a front-mounted harvesting attachment (418) and/or the rotational speed of a cleaning fan (440) and/or the opening size of a cleaning screen (444) and/or the advancing speed of the combine harvester (410).

10. Agricultural machine (10, 410) according to one of Claims 1 to 9, wherein the sensor (62, 70) is additionally set up to detect the inclination of the agricultural machine (10, 410) in the forward direction and/or in the sideward direction and the control device (54) can be operated to determine different topographic inclination zones of the field and to activate the working parameter of the agricultural machine, in addition to the activation on the basis of the topographic height zone, also on the basis of the respective topographic inclination zone.

11. Method for automatic setting of a working parameter of an agricultural machine (10, 410), wherein: an electronic control device (54) controls an actuator (34, 46, 52, 84, 86, 436, 438, 442), which is actuated under external power, for adjustment of at least one working parameter of the agricultural machine (10, 410), and a sensor (62, 70), which is connected to the control device (54), detects the vertical position of the agricultural machine (10, 410), **characterized in that** the control device (54), in a learning phase, divides the field into different topographic height zones in which the growing therein have different characteristics, and, in a usage phase, derives from the signals of the sensor (62, 70) which height zone of a number of zones of a field the agricultural machine (10, 410) is situated in in each case, and activates the actuator (34, 46, 52, 84, 86, 436, 438, 442) online as a function of the respective height zone, wherein the control device (54), during the learning phase, firstly learns and stores the relationships between operator inputs regarding the control of the actuator (34, 46, 52, 84, 86, 436, 438, 442) and the respective topographical zone, and subsequently, in the usage phase, controls the actuator (34, 46, 52, 84, 86, 436, 438, 442) on the basis of the respective topographical height zone and the associated stored operator input, and wherein, in the learning phase, the number and/or sizes of the topographical height zones are set automatically in the control device (54) by the control device (54) on the basis of the operator inputs, by virtue of the control device (54) identifying, on the basis of changing user inputs, where a boundary between the topographical zones is intended to lie, by virtue of the control device (54) automatically recording the end of a previous topographical zone and the start of a new topographical zone where the operator changes an operating parameter of the actuator (34, 46, 52, 84, 86, 436, 438, 442) and assigning the operator inputs to the respective zones.

## Revendications

1. Machine agricole (10, 410) pourvue d'un système de réglage automatique d'un paramètre de traitement, ledit système comprenant : un dispositif de commande électronique (54), un actionneur (34, 46, 52, 84, 86, 436, 438, 442) actionné par une force extérieure, commandé par le dispositif de commande (54) et destiné à régler au moins un paramètre de traitement de la machine agricole (10, 410), et un capteur (62, 70) relié au dispositif de commande (54) et destiné à détecter la position verticale de la machine agricole (10, 410), **caractérisée en ce que** le dispositif de commande (54) est conçu, dans une phase d'apprentissage, pour diviser le champ en différentes zones de hauteur topographiques dans lesquelles les plantes qui y poussent ont des propriétés différentes et, dans une phase d'application, pour déduire à partir des signaux du capteur (62, 70) dans quelle zone de hauteur parmi un certain nombre de zones d'un champ se trouve la machine agricole (10, 410) et pour commander l'actionneur (34, 46, 52, 84, 86, 436, 438, 442) en ligne en fonction de la zone de hauteur respective, le dispositif de commande (54) pouvant être utilisé pendant la phase d'apprentissage pour apprendre et mémoriser tout d'abord les relations entre les entrées d'opérateur destinées à commander l'actionneur (34, 46, 52, 84, 86, 436, 438, 442) et la zone topographique respective puis, pendant la phase d'application, pour commander l'actionneur (34, 46, 52, 84, 86, 436, 438, 442) sur la base de la zone de hauteur topographique respective et de l'entrée d'opérateur mémorisée associée et, dans la phase d'apprentissage, le nombre et/ou les dimensions des zones de hauteur topographiques pouvant être déterminés automatiquement dans le dispositif de commande (54) par le dispositif de commande (54) sur la base des entrées d'opérateur **en ce que** le dispositif de commande (54) est conçu pour reconnaître, sur la base des entrées de l'opérateur qui varient, l'endroit où une limite doit se situer entre les zones topographiques, **en ce que** le dispositif de commande (54) enregistre automatiquement la fin de la zone topographique précédente et le début d'une nouvelle zone topographique à l'endroit où l'opérateur modifie un paramètre de fonctionnement de l'actionneur (34, 46, 52, 84, 86, 436, 438, 442) et associe les entrées d'opérateur aux zones respectives.

2. Machine agricole (10, 410) selon la revendication 1, le dispositif de commande (54) pouvant être utilisé pour recevoir, par le biais d'un dispositif d'entrée (68) dans la phase d'application, des entrées d'un opérateur destinées à modifier les paramètres de fonctionnement de l'actionneur (34, 46, 52, 84, 86, 436, 438, 442), et pour actualiser les entrées d'opérateur apprises et mémorisées en fonction de ces entrées et à partir de là pour les utiliser pour commander l'actionneur (34, 46, 52, 84, 86, 436, 438, 442) .

3. Machine agricole (10, 410) selon l'une des revendications 1 et 2, le dispositif de commande (54) étant relié à un capteur de propriétés de sol (76) destiné à détecter des propriétés du sol et/ou à un capteur de propriétés de plantes (446) destiné à détecter des propriétés des plantes, et étant utilisé pour commander l'actionneur (34, 46, 52, 84, 86, 436, 438, 442) en outre sur la base des signaux du capteur de propriétés de sol (76) et/ou du capteur de propriétés de plantes (446).

4. Machine agricole (10, 410) selon l'une des revendications précédentes, le capteur (62) destiné à détecter la position verticale de la machine (10, 410) comprenant un capteur de pression d'air et/ou un système de détermination de position par satellite (62) .

5. Machine agricole (10) selon l'une des revendications 1 à 4, la machine agricole étant un tracteur (18) pourvu d'un dispositif de traitement (42, 50) monté sur celui-ci ou tiré par celui-ci, et l'actionneur (84) commandant la vitesse du tracteur (18) et/ou la vitesse de rotation d'un arbre de prise de force et/ou la position d'un accouplement réglable auquel le dispositif de traitement (42, 50) est fixé.

6. Machine agricole (10) selon l'une des revendications 1 à 5, la machine agricole (10) étant ou comprenant une machine de traitement de sol et l'actionneur (46, 52) commandant la profondeur de travail des outils de traitement de sol (42, 50) de la machine de traitement de sol.

7. Machine agricole (10) selon l'une des revendications 1 à 6, la machine agricole (10) étant ou comprenant un semoir pourvu de dispositifs de semis (24) et l'actionneur (34, 86) commandant la profondeur de semis et/ou l'espacement des graines dans la direction vers l'avant et/ou dans la direction latérale.

8. Machine agricole (10) selon l'une des revendications 1 à 5, la machine agricole (10) étant ou comprenant une machine de distribution destinée à distribuer des matières telles que des graines, des engrais, des herbicides ou des pesticides et l'actionneur (86) commandant la quantité distribuée par unité de surface.

9. Machine agricole (410) selon l'une des revendications 1 à 4, la machine agricole étant une moissonneuse-batteuse (410) et l'actionneur (84, 436, 438, 442) commandant la hauteur de coupe et/ou la hauteur de rabatteur d'une tête de récolte (418) et/ou la vitesse de rotation d'une soufflante de nettoyage (440) et/ou la taille d'ouverture d'un tamis de nettoyage (444) et/ou la vitesse d'avance de la moissonneuse-batteuse (410).

10. Machine agricole (10, 410) selon l'une des revendications 1 à 9, le capteur (62, 70) étant en outre conçu pour détecter l'inclinaison de la machine agricole (10, 410) dans la direction d'avance et/ou dans la direction latérale et le dispositif de commande (54) pouvant être utilisé pour déterminer différentes zones d'inclinaison topographiques du champ et pour commander les paramètres de traitement de la machine agricole, en plus de la commande basée sur la zone de hauteur topographique, également sur la base de la zone d'inclinaison topographique respective.

11. Procédé de réglage automatique d'un paramètre de traitement d'une machine agricole (10, 410), un dispositif de commande électronique (54) commandant un actionneur (34, 46, 52, 84, 86, 436, 438, 442) actionné par une force extérieure et destiné à régler au moins un paramètre de traitement de la machine agricole (10, 410) et un capteur (62, 70) relié au dispositif de commande (54) détectant la position verticale de la machine agricole (10, 410), **caractérisé en ce que** le dispositif de commande (54) divise, dans une phase d'apprentissage, le champ en différentes zones de hauteur topographiques dans lesquelles les qui y poussent ont des propriétés différentes et déduit, dans une phase d'application, à partir des signaux du capteur (62, 70), dans quelle zone de hauteur parmi un certain nombre de zones d'un champ se trouve la machine agricole (10, 410) et commande l'actionneur (34, 46, 52, 84, 86, 436, 438, 442) en ligne en fonction de la zone de hauteur respective, le dispositif de commande (54) apprenant et mémorisant, pendant la phase d'apprentissage, tout d'abord les relations entre les entrées d'opérateur destinées à commander l'actionneur (34, 46, 52, 84, 86, 436, 438, 442) et la zone topographique respective puis commandant, pendant la phase d'application, l'actionneur (34, 46, 52, 84, 86, 436, 438, 442) sur la base de la zone de hauteur topographique respective et de l'entrée d'opérateur mémorisée associée et, dans la phase d'apprentissage, le nombre et/ou les dimensions des zones de hauteur topographiques étant déterminés automatiquement dans le dispositif de commande (54) par le dispositif de commande (54) sur la base des entrées d'opérateur **en ce que** le dispositif de commande (54) reconnaît, sur la base des entrées de l'opérateur qui varient, l'endroit où une limite doit se situer entre les zones topographiques, **en ce que** le dispositif de commande (54) enregistre automatiquement la fin de la zone topographique précédente et le début d'une nouvelle zone topographique à l'endroit où l'opérateur modifie un paramètre de fonctionnement de l'actionneur (34, 46, 52, 84, 86, 436, 438, 442) et associe les entrées d'opérateur aux zones respectives.
